# DEMANDE DE BREVET EUROPEEN

(11) **EP 1 389 629 A1**
(43) Date de publication de la demande: **18.02.2004**
(21) Numéro de dépôt: 02016095.8
(22) Date de dépôt: 19.07.2002
(51) Int. Cl.: C08J 9/00, B32B 31/00

(54) **Mousse avec une bande de matière adhésive**

(71) Demandeur: NMC S.A., B-4731 Eynatten/Raeren (BE)
(72) Inventeur: Dujardin, René, 4730 Raeren (BE)
(74) Mandataire: Kihn, Pierre Emile Joseph

(57) **Abrégé**

L'invention concerne une mousse comprenant au moins une matière adhésive appliquée en une bande sur une surface de la mousse fraîchement extrudée. L'invention est caractérisée en ce que la bande de matière adhésive est divisée en plusieurs pistes, une première partie de ces pistes comportant de la matière adhésive et une deuxième partie de ces pistes ne comportant pas de matière adhésive, en ce que les pistes comportant de la matière adhésive et les pistes ne comportant pas de matière adhésive sont disposées alternativement sur la surface de la mousse et en ce que la surface en contact avec la matière adhésive est sans irrégularités après dégazage de la mousse.

## Description

La présente invention concerne une mousse avec une bande de matière adhésive.

Les mousses polymériques sont bien connues et leur domaine d'application est vaste. Pour la fabrication de telles mousses, des polymères et le cas échéant des additifs sont mélangés et plastifiés sous pression à haute température. Un gaz de moussage sous pression est injecté dans ce mélange qui est ensuite extrudé à travers une filière et refroidi. Lors de son extrusion à l'air libre, le mélange subit une chute de pression qui entraîne la formation de bulles de gaz à l'intérieur du mélange, provoquant ainsi la formation de la mousse. La mousse est ensuite dégazée.

Afin de pouvoir fixer la mousse sur un support, une matière adhésive est appliquée en une bande sur une face de la mousse. En général, une colle thermofusible auto-adhésive (hot-melt) est appliquée à l'état fondu en tant que bande de matière adhésive sur une surface de la mousse fraîchement extrudée. La bande de matière adhésive est recouverte d'un papier de séparation qui sert de protection pendant le transport. L'application de l'adhésif sur la mousse fraîchement extrudée provoque cependant des irrégularités sur la surface de la mousse à l'endroit où la bande de matière adhésive a été appliquée. On constate qu'après le dégazage de la mousse, la surface de la mousse couverte par la bande de matière adhésive est accidentée et présente des aspérités. Outre leur aspect esthétique peu attrayant, ces irrégularités de surface entraînent une adhérence non-uniforme de la mousse à un substrat.

Pour certaines applications, par exemple dans le cas où une adhérence uniforme de la mousse à un substrat est désirée, une mousse ayant une surface lisse, sans irrégularités est nécessaire. Afin d'obtenir une telle mousse, qui, à l'état dégazé, comporte une surface adhésive lisse et sans aspérités, on applique la bande de matière adhésive sur une surface de la mousse après le dégazage de celle-ci. Par conséquent, il est nécessaire de stocker la mousse après l'extrusion jusqu'à ce qu'elle soit dégazée. Ensuite seulement, la bande de matière adhésive y est appliquée. La manipulation supplémentaire de la mousse qui est nécessaire pour obtenir une surface adhésive sans irrégularités entraîne cependant un coût de production supérieur.

L'objet de la présente invention est de proposer une mousse avec une bande de matière adhésive appliquée sur une surface de la mousse fraîchement extrudée, dans laquelle la surface couverte ne présente pas d'irrégularités après le dégazage.

Conformément à l'invention, cet objectif est atteint par une mousse comprenant au moins une matière adhésive appliquée en une bande sur une surface de la mousse fraîchement extrudée. La mousse étant caractérisée en ce que la bande de matière adhésive est divisée en plusieurs pistes, une première partie de ces pistes comportant de la matière adhésive et une deuxième partie de ces pistes ne comportant pas de matière adhésive, en ce que les pistes comportant de la matière adhésive et les pistes ne comportant pas de matière adhésive sont disposées alternativement sur la surface de la mousse et en ce que la surface en contact avec la matière adhésive est sans irrégularités après dégazage de la mousse.

Une telle mousse comprend une bande de matière adhésive appliquée sur une surface de la mousse fraîchement extrudée, la bande de matière adhésive étant divisée en plusieurs pistes, une piste sans matière adhésive étant à chaque fois disposée entre deux pistes comportant de la matière adhésive. Il est ainsi possible d'obtenir une surface en contact avec la bande de matière adhésive qui est lisse et sans irrégularités après dégazage de la mousse. Par aspect lisse et sans irrégularités, on entend dans le cadre de la présente invention un aspect de surface qui est en fait très similaire à l'aspect de la surface d'une mousse non enduite de matière adhésive.

Une bande de matière adhésive avec plusieurs pistes adhésives séparées permet un dégazage plus uniforme de la mousse. En effet, comme la bande de matière adhésive comprend des pistes sans matière adhésive disposées entre deux pistes comportant de la matière adhésive, le dégazage de la mousse est beaucoup moins gêné par la bande de matière adhésive appliquée sur la mousse fraîchement extrudée. Une déformation de la surface de la mousse couverte par la bande de matière adhésive lors du dégazage est donc évitée et une mousse sans irrégularités de surface est obtenue après dégazage. Ceci évite de prévoir un stockage intermédiaire de la mousse et l'application ultérieure de la bande de matière adhésive. Par conséquent, les coûts de production d'une mousse avec une surface sans irrégularités sont diminués.

Afin d'éviter l'affaissement de la mousse, la présente invention propose d'utiliser une bande de matière adhésive comprenant alternativement des pistes avec de la matière adhésive et des pistes sans matière adhésive.

Par conséquent, un mérite de l'invention est d'avoir découvert que l'application d'une bande de matière adhésive sur une mousse fraîchement extrudée provoque une variation locale de la perméabilité de la mousse par rapport au gaz de moussage. Cette variation locale de la perméabilité entraîne un affaissement de la mousse en contact avec l'adhésif, formant ainsi une surface irrégulière présentant des aspérités après le dégazage.

Les irrégularités de surface empêchent un contact uniforme entre la matière adhésive et le substrat sur lequel la mousse est collée. Comme, dans le cas d'une mousse selon l'invention, ces irrégularités de surface sont évitées, un meilleur contact entre la matière adhésive et le substrat est obtenu. L'adhérence à un substrat d'une mousse selon l'invention est par conséquent meilleure. Pour obtenir la même force d'adhérence, il est donc possible de diminuer la quantité et/ou la surface de matière adhésive appliquée, ce qui constitue un avantage économique.

La matière adhésive est avantageusement une colle thermofusible auto-adhésive qui est appliquée à l'état fondu sur la mousse.

Grâce à l'alternance de pistes comportant de la matière adhésive et de pistes sans matière adhésive, la quantité de chaleur appliquée localement sur la mousse est diminuée. En effet, grâce aux pistes sans matière adhésive de part et d'autre des pistes comportant de la matière adhésive, la matière adhésive refroidit plus vite. Le risque d'affaissement de la mousse est par conséquent fortement réduit, voire indécelable. Il en résulte une surface de la mousse régulière, c.-à-d. sans aspérités, après le dégazage de la mousse.

Les pistes peuvent être continues ou discontinues. Elles peuvent être rectilignes, ondulées ou en zigzag. En fait, leur forme n'a pas vraiment d'importance.

Les pistes à matière adhésive et les pistes sans matière adhésive sont de préférence parallèles.

De préférence, le rapport entre les surfaces occupées par les pistes comportant de la matière adhésive et les surfaces occupées par les pistes sans matière adhésive se situe entre 0.2 et 5, de préférence entre 0.5 et 2. Ces rapports de surface dépendent en général du polymère, du type et de la quantité d'additifs incorporés dans la mousse, de la densité de la mousse, du gaz de moussage. De façon plus préférentielle, le rapport est de 1, c.-à-d. que la surface des pistes comportant de la matière adhésive est identique à celle des pistes sans matière adhésive.

Les pistes ont de préférence une largeur entre 0.5 et 15 mm et de préférence entre 2 et 8 mm.

Habituellement, la largeur des pistes comportant de la matière adhésive est identique à celle des pistes sans matière adhésive.

Avantageusement, une bande comporte entre 3 et 15 pistes.

La bande de matière adhésive comprend de préférence un papier de séparation pour protéger la bande de matière adhésive. Avant de coller la mousse sur un substrat, le papier de séparation est enlevé, révélant ainsi la matière adhésive appliquée sur la mousse.

La mousse est de préférence une mousse polymérique choisie parmi le groupe comprenant les polyoléfines, les métallocènes, les polystyrènes, leurs copolymères et leurs mélanges.

La mousse peut comprendre des additifs usuels comme par exemple les stabilisateurs de cellules, les nucléants, les antifeus, les antiUV, les pigments, les lubrifiants, les anti-oxydants, les absorbeurs d'infrarouges et leurs mélanges.

Le gaz de moussage est avantageusement un gaz de moussage choisi parmi le groupe comprenant les alcanes, les HFC, le CO₂, le N₂, l'Ar et leurs mélanges.

La présente invention propose également un procédé de fabrication d'une mousse comprenant les étapes consistant à :
- produire une mousse par extrusion,
- appliquer, sur une surface de la mousse fraîchement extrudée, une matière adhésive en une bande, la bande de matière adhésive étant divisée en plusieurs pistes, une première partie de ces pistes comportant de la matière adhésive et une deuxième partie de ces pistes ne comportant pas de matière adhésive, les pistes comportant de la matière adhésive et les pistes ne comportant pas de matière adhésive étant disposées alternativement sur la surface de la mousse
- dégazer la mousse pour obtenir une mousse comportant une surface en contact avec la matière adhésive sans irrégularités après dégazage.

Dans un premier mode de réalisation avantageux, la matière adhésive est une colle thermofusible auto-adhésive (hot-melt), qui est fondue dans un fondoir et pompée à travers une buse d'injection pour déposer les pistes comportant de la matière adhésive.

Selon un mode de réalisation préféré, les pistes comportant de la matière adhésive sont déposées sur un papier de séparation appliqué ensuite sur une surface de la mousse. Le papier de séparation peut être enlevé avant de fixer la mousse sur un substrat.

Le dépôt de la matière adhésive peut se faire soit par un dispositif qui est en contact avec le papier de séparation, soit avec un dispositif qui n'est pas en contact avec le papier de séparation. Dans ce dernier cas, le papier de séparation est guidé quelques centimètres en dessous de la buse et la matière adhésive forme des filaments qui se déposent sur le papier.

Selon un autre mode de réalisation préféré, les pistes comportant de la matière adhésive sont déposées en continu sur un rouleau de transfert rotatif, de préférence thermostatisé et anti-adhésif, qui est en contact avec la surface de la mousse.

Avantageusement, un gaz, de préférence l'azote, est injecté dans la matière adhésive fondue, avant son application sur la mousse. Ainsi, il est possible d'obtenir une structure moussée des pistes à matière adhésive. Une plus grande surface de contact pour une même quantité de colle, et une épaisseur de la piste plus grande pour un meilleur étalement lors de la pose sur un substrat rugueux sont obtenues.

Par la suite, un mode de réalisation avantageux de l'invention est décrit à titre d'exemple en se référant aux figures annexées dans lesquelles la:
- Fig.1 :: représente une vue en coupe d'une mousse selon l'état de la technique avant le dégazage de la mousse ;
- Fig.2 :: représente une vue en coupe d'une mousse selon l'état de la technique après le dégazage de la mousse ;
- Fig.3 :: représente une vue en coupe d'une mousse selon l'invention avant le dégazage de la mousse ;
- Fig.4 :: représente une vue en coupe d'une mousse selon l'invention après le dégazage de la mousse ;
- Fig.5 :: représente une installation pour appliquer une bande de matière adhésive sur une mousse fraîchement extrudée ;
- Fig.6 :: représente une vue schématique d'une tête de buse selon l'état de la technique ;
- Fig.7 :: représente une vue sur une bande de matière adhésive déposée au moyen de la tête de buse de la Fig.6 ;
- Fig.8 :: représente une vue schématique d'une tête de buse selon l'invention ; et
- Fig.9 :: représente une vue en plan d'une bande de matière adhésive déposée au moyen de la tête de buse de la Fig.8 ; et
- Fig.10 :: représente un autre mode de réalisation d'une installation pour appliquer une bande de matière adhésive sur une mousse fraîchement extrudée.

Sur les figures, les mêmes références désignent des éléments identiques ou similaires.

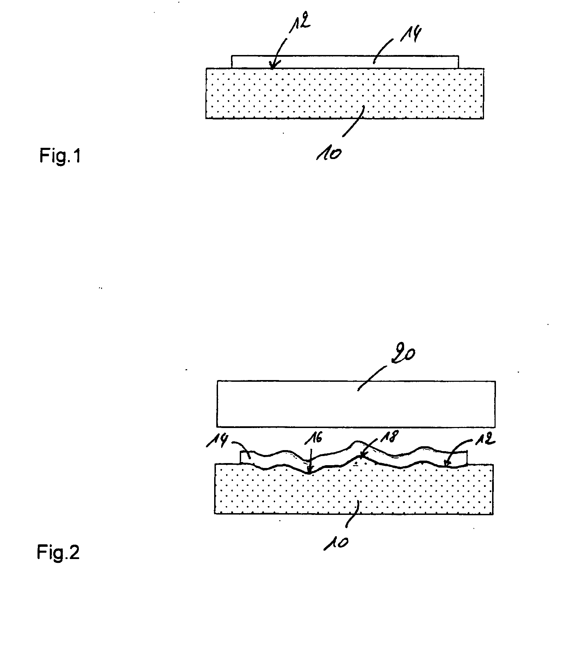

La fig.1 montre une coupe à travers une mousse 10 selon l'état de la technique avec une surface 12 sur laquelle une bande de matière adhésive 14 a été appliquée avant le dégazage. La fig.2 montre la même mousse 10 après le dégazage de la mousse 10. La surface 12 de la mousse 10 est affaissée, rugueuse et comprend des creux 16 et des bosses 18. La rugosité dans la surface 12 empêche une bonne adhérence de la surface 12 de la mousse 10 à un substrat 20.

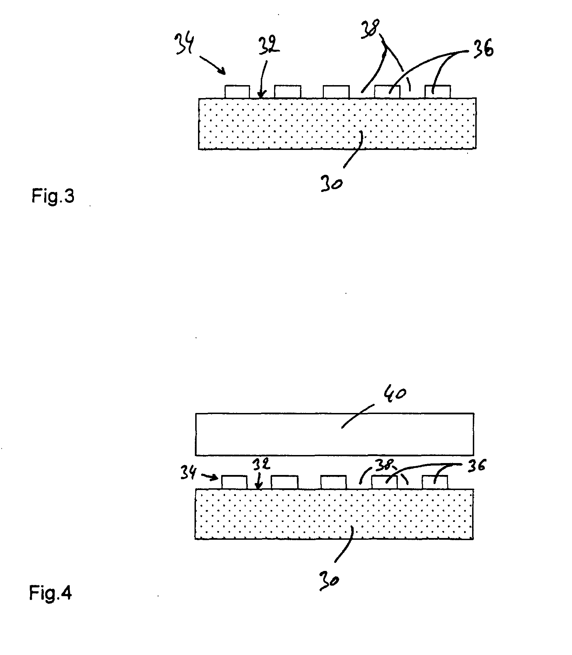

La fig.3 montre une coupe d'une mousse 30 avec une surface 32 sur laquelle une bande de matière adhésive 34 selon l'invention a été appliquée. La bande de matière adhésive 34 comprend alternativement des pistes avec de la matière adhésive 36 et des pistes sans matière adhésive 38. La fig.4 montre la même mousse 30 après le dégazage de la mousse 30. La surface 32 de la mousse ne présente pas d'irrégularités. La bonne qualité de la surface 32 permet une bonne adhérence de la mousse 30 à un substrat 40.

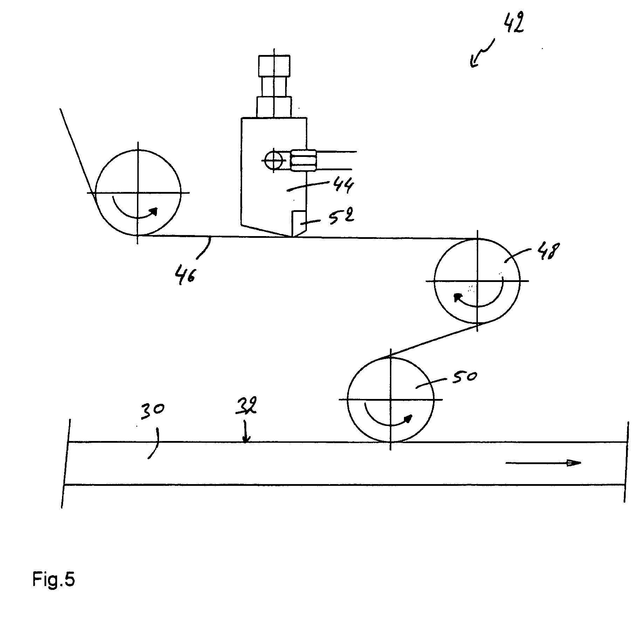

La fig.5 montre une installation 42 pour appliquer une bande de matière adhésive sur une mousse fraîchement extrudée. Une matière adhésive, de préférence une colle thermofusible auto-adhésive, est fondue dans un fondoir (non représenté) et est amenée à une buse 44. La matière adhésive est déposée par la buse 44 sur un papier de séparation 46 défilant sous la buse 44. Le papier de séparation 46 est guidé par un ou plusieurs rouleaux de guidage 48 et appliqué, avec sa face comprenant la matière adhésive, sur une surface 32 d'une mousse 30 fraîchement extrudée via un rouleau de transfert 50. La buse 44 comprend une tête de buse 52 pour déposer une bande de matière adhésive sur le papier de séparation.

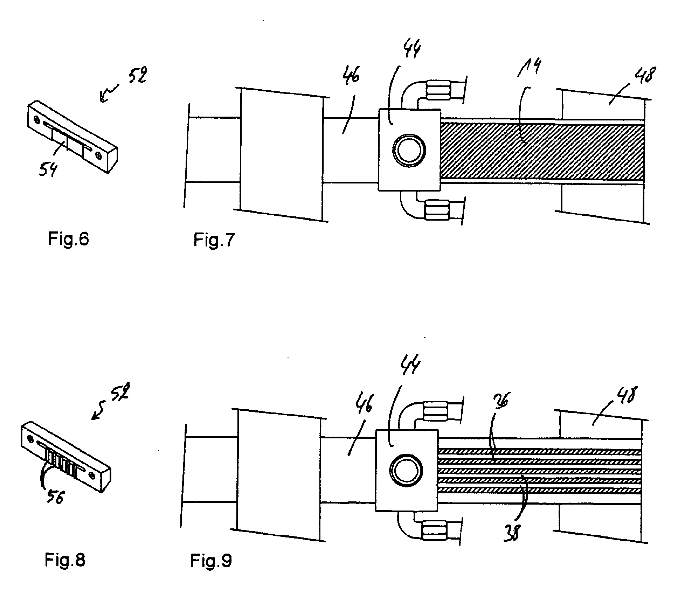

Une tête de buse 52 selon l'état de la technique est montrée à la fig.6 et la bande de matière adhésive déposée au moyen de cette tête de buse 52 est montrée à la fig.7. La tête de buse 52 comprend une large ouverture 54 pour déposer une large bande de matière adhésive 14 sur le papier de séparation 46.

Une tête de buse 52 selon l'invention est montrée en fig.8 et la bande de matière adhésive déposée au moyen de cette tête de buse est montrée en fig.9. La tête de buse 52 comprend une pluralité d'ouvertures 56 pour déposer une pluralité de pistes à matière adhésive 36 sur le papier de séparation 46. Les pistes à matière adhésive 36 sont à chaque fois séparées par une piste sans matière adhésive 38.

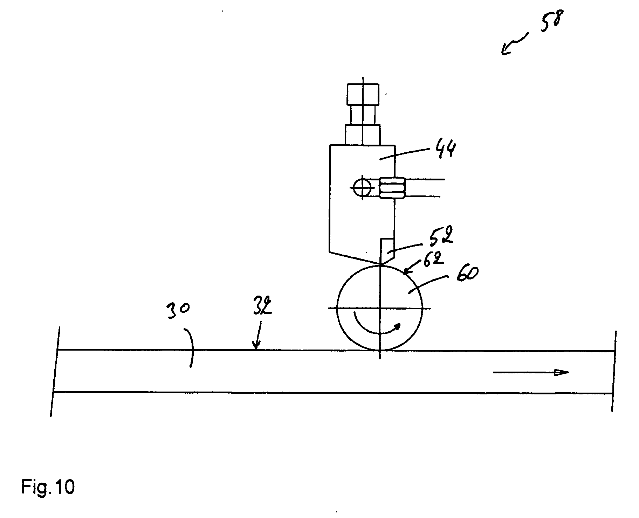

La Fig.10 montre un autre mode de réalisation d'une installation 58 pour appliquer une bande de matière adhésive sur une mousse fraîchement extrudée. Selon ce mode de réalisation, la bande de matière adhésive est déposée sur un rouleau de transfert 60 thermostatisé et anti-adhésif, qui touche une surface 32 de la mousse 30 fraîchement extrudée.

Ainsi, les pistes à matière adhésive sont déposées par la tête de buse 52 de la buse 44 sur une surface circonférentielle 62 du rouleau de transfert 60 et ensuite transférées sur la surface 32 de la mousse 30 fraîchement extrudée.

## Revendications

1. Mousse comprenant au moins une matière adhésive appliquée en une bande sur une surface de la mousse fraîchement extrudée, **caractérisée en ce que** la bande de matière adhésive est divisée en plusieurs pistes, une première partie de ces pistes comportant de la matière adhésive et une deuxième partie de ces pistes ne comportant pas de matière adhésive, **en ce que** les pistes comportant de la matière adhésive et les pistes ne comportant pas de matière adhésive sont disposées alternativement sur la surface de la mousse et **en ce que** la surface en contact avec la matière adhésive est sans irrégularités après dégazage de la mousse.

2. Mousse selon la revendication 1, dans laquelle la matière adhésive est une colle thermofusible auto-adhésive.

3. Mousse selon l'une des revendications précédentes, dans laquelle les pistes sont continues ou discontinues.

4. Mousse selon l'une des revendications précédentes, dans laquelle les pistes sont rectilignes, ondulées ou en zigzag.

5. Mousse selon l'une des revendications précédentes, dans laquelle les pistes sont parallèles.

6. Mousse selon l'une des revendications précédentes, dans laquelle le rapport entre les surfaces des pistes comportant de la matière adhésive et les surfaces des pistes ne comportant pas de matière adhésive se situe entre 0.2 et 5, de préférence entre 0.5 et 2.

7. Mousse selon l'une des revendications précédentes, dans laquelle les pistes ont une largeur comprise entre 0.5 et 15 mm, de préférence entre 2 et 8 mm.

8. Mousse selon l'une des revendications précédentes, dans laquelle la bande de matière adhésive comprend entre 3 et 15 pistes.

9. Mousse selon l'une des revendications précédentes, dans laquelle la bande de matière adhésive est recouverte par un papier de séparation.

10. Mousse selon l'une des revendications précédentes, dans laquelle la mousse est une mousse polymérique choisie parmi le groupe comprenant les polyoléfines, les métallocènes, les polystyrènes, leurs copolymères, et leurs mélanges.

11. Procédé de fabrication d'une mousse comprenant les étapes consistant à :
- produire une mousse par extrusion,
- appliquer, sur une surface de la mousse fraîchement extrudée, une matière adhésive en une bande, la bande de matière adhésive étant divisée en plusieurs pistes, une première partie de ces pistes comportant de la matière adhésive et une deuxième partie de ces pistes ne comportant pas de matière adhésive, les pistes comportant de la matière adhésive et les pistes ne comportant pas de matière adhésive étant disposées alternativement sur la surface de la mousse
- dégazer la mousse pour obtenir une mousse comportant une surface en contact avec la matière adhésive sans irrégularités après dégazage.

12. Procédé selon la revendication 11, dans lequel la matière adhésive est une colle thermofusible auto-adhésive, la matière adhésive étant fondue dans un fondoir et pompée à travers une buse d'injection pour déposer la matière adhésive en une bande sur la mousse fraîchement extrudée.

13. Procédé selon la revendication 11, dans lequel la matière adhésive est déposée en une bande sur un papier de séparation qui est appliqué ensuite sur la surface de la mousse.

14. Procédé selon la revendication 11, dans lequel la matière adhésive est déposée en une bande en continu sur un rouleau de transfert rotatif qui est en contact avec la surface de la mousse.

15. Procédé selon l'une quelconque des revendications 11 à 14, dans lequel un gaz, de préférence l'azote, est injecté dans la matière adhésive.
